# EUROPEAN PATENT SPECIFICATION

(11) **EP 4 152 621 B1**
(45) Date of publication and mention of the grant of the patent: **28.02.2024**
(21) Application number: 20942563.6
(22) Date of filing: 29.06.2020
(51) Int. Cl.: H04B 1/10, H04B 1/3822

(54) **NETWORK CONNECTION METHOD AND APPARATUS, ELECTRONIC DEVICE, AND STORAGE MEDIUM**
NETZWERKVERBINDUNGSVERFAHREN UND -VORRICHTUNG, ELEKTRONISCHE VORRICHTUNG UND SPEICHERMEDIUM
PROCÉDÉ ET APPAREIL DE CONNEXION DE RÉSEAU, DISPOSITIF ÉLECTRONIQUE ET SUPPORT DE STOCKAGE

(43) Date of publication of application: 22.03.2023
(73) Proprietor: Zhejiang Geely Holding Group Co., Ltd., Hangzhou, Zhejiang 310051 (CN); Zhejiang Liankong Technologies Co., Ltd, Ningbo, Zhejiang 315336 (CN)
(72) Inventor: HUANG, Guanming, Hangzhou Bay New District, Ningbo, Zhejiang Province (CN); SHANG, Xin, Hangzhou Bay New District, Ningbo, Zhejiang Province (CN)
(74) Representative: Osterhoff, Utz
(86) International application number: PCT/CN2020/098944
(87) International publication number: WO 2022/000194

(56) References cited:
- CN-A- 103 108 230
- CN-A- 103 634 881
- CN-A- 103 780 274
- CN-A- 110 758 293
- GB-A- 2 414 905
- US-A- 5 548 818
- US-A1- 2009 015 468
- US-A1- 2015 296 388

## Description

### FIELD OF THE INVENTION

The present application relates to the field of communication technology, and in particular, to a network connection method and apparatus, an electronic device, and a storage medium.

### BACKGROUND OF THE INVENTION

In the case of weak signal, a mobile communication device often increases transmitting power to find a base station with stronger or even farther signal, thereby avoiding the situation of network disconnection. However, increasing the transmitting power inevitably leads to an increase in power consumption, which is the same as the truth that the power of a mobile phone, which is not turned off in a plane, drops particularly fast.

CN110758293 discloses a power supply management method and device of a vehicle-mounted intelligent device and a readable storage medium. The power supply management method of the vehicle-mounted intelligent device comprises the steps that when a vehicle is detected to be in a flameout state, a network of the vehicle-mounted intelligent device is disconnected, and a first set resource module of the vehicle-mounted intelligent device is turned off, so that the vehicle-mounted intelligent device enters a deep sleep mode; the vehicle-mounted intelligent device is periodically woken up by periodically sending a waking up instruction to the vehicle-mounted intelligent device through a reserved waking up interface; and the vehicle-mounted intelligent device is controlled to acquire vehicle state information of the vehicle after being woken up, and the vehicle state information is reported to a cloud platform. According to the method and device and the storage medium, the scheme can reduce the energy consumption of the vehicle-mounted intelligent device.

US5548818 teaches a method and system for radio communications between mobile units and base stations geographically distributed through a substantial geographic area described. The system automatically finds and engages broadcast frequency for each geographic region. The engagement is confirmed at both the mobile unit and network so that both can begin data transmission and reception between each other as well as keep track of the status of one another. The system also verifies the correct base station has been engaged as well as automatically terminates communications once the mobile unit passes out of coverage for that base station.US2009015468 relates to a vehicle communication terminal that stops a currently-operating GPS engine when a vehicle is put into a parking condition, memorizes a station number transmitted from a base station that serves as a waiting station, starts the stopped GPS engine when a currently-received station number and plural station numbers memorized after parking do not match, and transmits an emergency report signal including positional information derived from GPS measurement by the GPS engine, pre-registered vehicle information and the like through a communication network to a center terminal or a user terminal for suppressing vehicle battery capacity loss while timely performing an emergency report in case of vehicle theft.

For a vehicle-mounted communication device, if it adopts a way of the mobile phone for weak signal connection, particularly when the vehicle is parked in a non-network area such as a basement for a long time, a faster power loss of the entire vehicle will be caused, thereby bringing unnecessary trouble to the owner of the vehicle.

### BRIEF DESCRIPTION OF THE INVENTION

The embodiments of the present application provide a network connection method and apparatus, an electronic device, and a storage medium, for saving power consumed by a device on a vehicle searching for a network frequency point before a network connection is made. The invention is set out in the appended set of claims.

### BRIEF DESCRIPTION OF THE DRAWINGS

In order to more clearly illustrate the technical solutions and advantages of the embodiments of the present application or the prior art, the accompanying drawings required in the descriptions of the embodiments or the prior art will be briefly introduced below. Apparently, the accompanying drawings in the following descriptions are only some embodiments of the present application, and those of ordinary skill in the art may still obtain other drawings from these drawings without creative efforts.
FIG. 1 is a schematic diagram of an application environment according to an embodiment of the present application;
FIG. 2 is a schematic diagram of an application environment according to an embodiment of the present application;
FIG. 3 is a schematic flowchart of a network connection method according to an embodiment of the present application;
FIG. 4 is a schematic flowchart of a network connection method according to an embodiment of the present application;
FIG. 5 is a schematic structural diagram of a network connection apparatus according to an embodiment of the present application; and
FIG. 6 is a block diagram of a hardware structure of a server of a network connection method according to an embodiment of the present application.

### DETAILED DESCRIPTION

The technical solutions in the embodiments of the present application are described clearly and completely below in combination with the drawings in the embodiments of the present application. Apparently, the described embodiments are merely a part of the embodiments of the present application, rather than all of the embodiments. On the basis of the embodiments in the present application, all other embodiments obtained by those of ordinary skill in the art without creative efforts fall within a protection scope of the present application.

It should be noted that the terms "first", "second", and the like in the specification, the claims, and the drawings of the present invention are used to distinguish between similar objects and not necessarily used to describe a specific sequence or order. It should be understood that data so used are interchangeable under appropriate circumstances, such that the embodiments of the present invention described herein can be implemented in a sequence other than those illustrated or described herein. In addition, the terms "comprising", and "having" and any variations thereof are intended to cover non-exclusive inclusion. For example, a process, a method, a system, a product or a server including a series of steps or units is not necessarily limited to the explicitly listed steps or units, but may include other steps or units that are not explicitly listed or are inherent to such process, method, product or device.

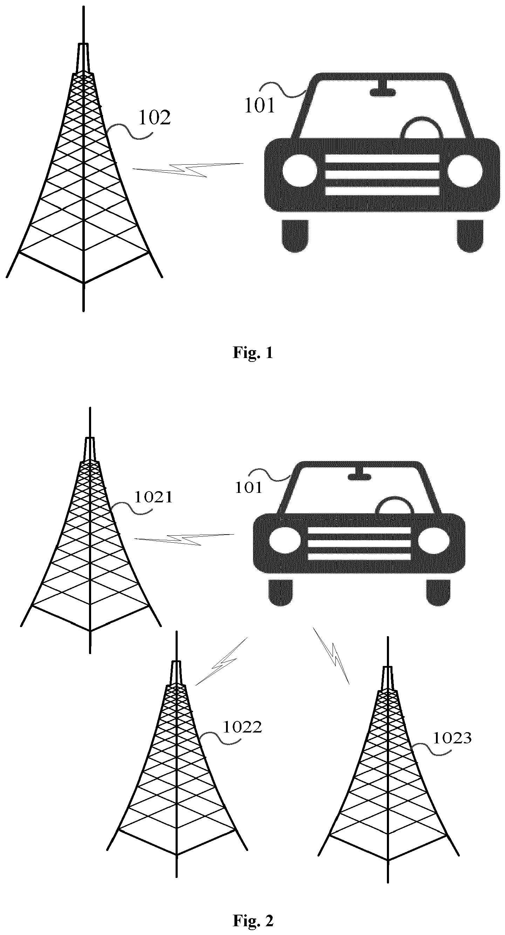

Please referring to FIG. 1 and FIG. 2, FIG. 1 and FIG. 2 are schematic diagrams of an application environment according to an embodiment of the present application, and the schematic diagrams include a vehicle 101 and a base station 102, where the vehicle 101 may be an unmanned vehicle, that is, an autonomous vehicle, or may alternatively be a semi-autonomous vehicle. In an optional implementation, as shown in FIG. 1, there is only one base station 102 within a certain distance from the vehicle, and network frequency points in a network frequency point table are all network frequency points corresponding to the base station. In another optional implementation, as shown in FIG. 2, there may be a plurality of base stations 1021, 1022, and 1023 within a certain distance from the vehicle. Each network frequency point in the network frequency point table belongs to the plurality of base stations.

Based on the schematic diagrams of the application environment, specifically, if a device in the vehicle 101 detects that the vehicle is in a stalled state, a network frequency point table may be extracted from a frequency point storage area of the vehicle 101, where the network frequency point table at least includes one network frequency point, and the network frequency point is acquired and stored in the network frequency point table after the vehicle is started. Then, the device in the vehicle 101 may cyclically search for each network frequency point in the network frequency point table, and then determine a current network signal strength corresponding to each network frequency point. According to the current network signal strength corresponding to each network frequency point, a target network frequency point to be connected is determined, and the target network frequency point is connected, and then data interaction is performed.

In the embodiments of the present application, the device in the vehicle 101 may be at a vehicle-mounted terminal, and further specifically a communication device in the vehicle-mounted terminal, and the following description is provided by using the vehicle-mounted terminal in the vehicle as an example.

A network frequency point is a number for a fixed frequency. A frequency interval is generally 200 KHz, so that the 890 MHz-915 MHz is divided into 125 wireless frequency bands from 890 MHz, 890.2 MHz, 890.4 MHz, 890.6 MHz, 890.8 MHz, 891 MHz ... 915 MHz according to the frequency interval of 200 KHz, and each band is numbered from 1, 2, 3, 4 ... 125; these numbers for the fixed frequencies are the network frequency points; or conversely, the network frequency points are numbers for the fixed frequencies. In a GSM network, the frequency is replaced with the network frequency point to specify a transmitting frequency of a transceiver group. For example: a carrier is specified with a frequency point of 3, that is to say, the carrier will receive an uplink signal with a frequency of 890.4 MHz and transmit the signal at a frequency of 935.4 MHz.

In the embodiments of the present application, one base station may correspond to one frequency point, or may alternatively correspond to a plurality of network frequency points.

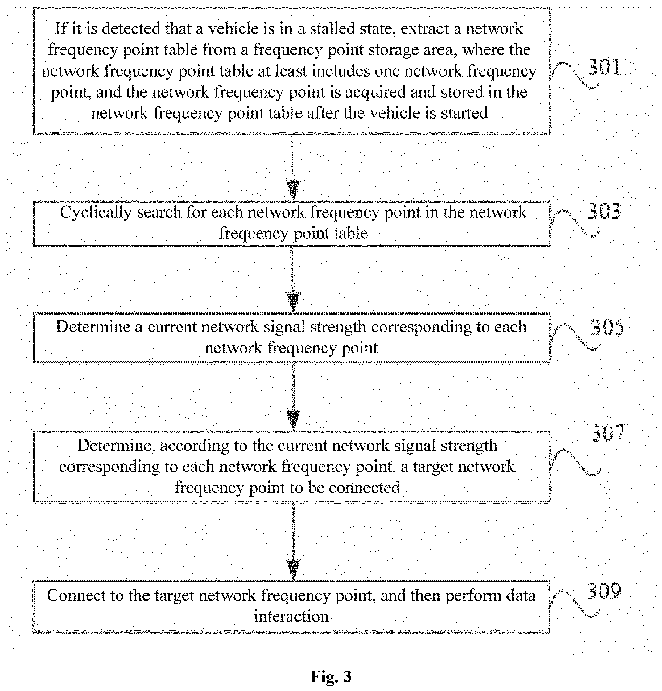

A specific embodiment of a network connection method according to the present application will be introduced below. FIG. 3 is a schematic flowchart of a network connection method provided by an embodiment of the present application. The specification provides operation steps of the method as described in the embodiments or the flowchart, but may include more or fewer operation steps based on conventional or uncreative labor. The sequence of steps listed in the embodiments is only one of many execution sequences of steps and does not represent the only execution sequence. In actual execution of a system or a server product, the steps may be executed sequentially or in parallel (for example, a parallel processor or multi-threaded processing environment) according to the methods shown in the embodiments or the accompanying drawings. As shown in FIG. 3 specifically, the method may include:
S301: if it is detected that a vehicle is in a stalled state, a network frequency point table is extracted from a frequency point storage area, where the network frequency point table at least includes one network frequency point, and the network frequency point is acquired and stored in the network frequency point table after the vehicle is started.

Optionally, the frequency point storage area is located in a storage unit of the vehicle, and if it is detected by a vehicle-mounted terminal that a vehicle is in a stalled state, the vehicle-mounted terminal may extract the network frequency point table from the frequency point storage area to provide the vehicle-mounted terminal with conditions for a network connection when the vehicle is stalled and parked.

In the embodiments of the present application, "after the vehicle is started" in step S301 may include any one of time periods from starting to stalling. Optionally, the network frequency point may be acquired when the vehicle is starting, when the vehicle is traveling, and when the vehicle is stopped but not stalled.

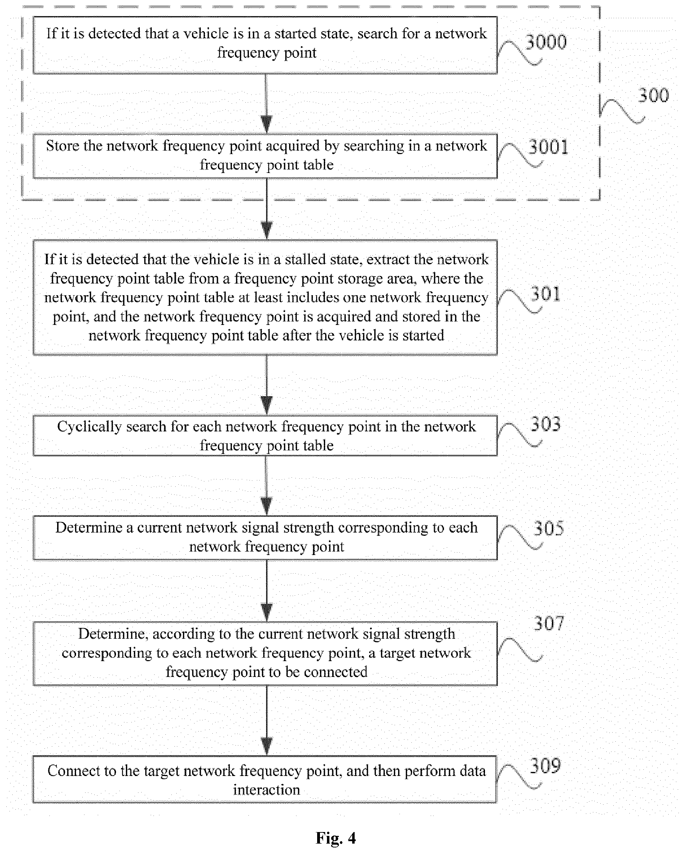

The network frequency point is acquired and stored in the network frequency point table after the vehicle is started, therefore, as shown in FIG. 4, in an optional implementation, the network connection method further includes a step of specifically storing the network frequency point in the network frequency point table.

S3000: if it is detected that the vehicle is in a started state, a network frequency point is searched.

Optionally, corresponding to the above content, a started state may include being in a starting state, a traveling state after starting, and a parking state after starting.

There is a certain distance between setting positions of each base station, and the base stations in a certain range near the vehicle keep switching after the vehicle is started, therefore, the vehicle-mounted terminal may search for the network frequency points when it is detected that the vehicle is in the started state to acquire the network frequency points corresponding to the base stations within a certain distance from the vehicle.

S3001: the network frequency point acquired by searching is stored in the network frequency point table.

For example, it is supposed that after the vehicle is started, three network frequency points 98, 99, and 100 of a base station A, one network frequency point 78 of a base station B, and two network frequency points 56 and 55 of a base station C are searched. The vehicle-mounted terminal may store the network frequency points 98, 99, 100, 78, 56, and 55 in the network frequency point table.

In an optional implementation, the vehicle-mounted terminal may store the network frequency point acquired by searching in the network frequency point table according to a time sequence. Based on the above example of three base stations, it is supposed that the vehicle-mounted terminal first searches for three network frequency points 98, 99, and 100 of the base station A; then one network frequency point 78 of the base station B; and finally two network frequency points 56 and 55. The vehicle-mounted terminal may store the network frequency points 98, 99, 100, 78, 56, and 55 into the network frequency point table in sequence to get the sequence of 55, 56, 78, 100, 99, 98 ..., that is to say, the later a network frequency point is searched, the more preceding a storage position is.

However, if all the network frequency points searched during the vehicle traveling are stored in the network frequency point table, not only a large amount of storage space is wasted, but also some network frequency points, due to the distance, cannot contribute to a subsequent network connection. Therefore, to efficiently connect and save storage space during subsequent cyclical searching, in an optional implementation, the quantity of network frequency points in the network frequency point table is preset, for example, the quantity of network frequency points that can be stored in the network frequency point table is 10.

In the embodiments of the present application, the vehicle-mounted terminal, by combining with the limit of the quantity of the previous paragraph, may replace a historical network frequency point in the network frequency point table with the network frequency point acquired by searching according to a time sequence. For example, the network frequency point table has stored 10 historical network frequency points 1, 2, 3, 4, 5, 6, 7, 8, 9, and 10. When the network frequency points 98, 99, 100, 78, 56, and 55 are searched in sequence, the vehicle-mounted terminal will replace the historical network frequency points in the network frequency point table with the network frequency points acquired by searching according to a time sequence, thereby obtaining an updated network frequency point table in the sequence of 55, 56, 78, 100, 99, 98, 1, 2, 3 and 4 from the front to the back.

In another optional implementation, if a base station corresponds to a plurality of network frequency points, for example, the base station A in the above example, network signal strength corresponding to different network frequency points under the same base station is determined, and the network frequency points in the network frequency point table are sorted according to the network signal strength.

For example, the network signal strength of the network frequency point 98 under the base station A is greater than that of the network frequency point 99, and the network signal strength of the network frequency point 99 is greater than that of the network frequency point 100, so the network frequency point table in the sequence of 55, 56, 78, 100, 99, 98, 1, 2, 3 and 4 from the front to the back is updated again to 55, 56, 78, 98, 99, 100, 1, 2, 3 and 4 according to the network signal strength.

S303: each network frequency point in the network frequency point table is cyclically searched.

In an optional step that each network frequency point in the network frequency point table is cyclically searched, the vehicle-mounted terminal may cyclically search for each network frequency point in the network frequency point table according to a sequence of front to back. Optionally, the vehicle-mounted terminal may further cyclically search for each network frequency point in the network frequency point table according to a preset first time interval, for example, the first time interval is 10 seconds.

S305: a current network signal strength corresponding to each network frequency point is determined.

The vehicle-mounted terminal may determine a current network signal strength corresponding to each network frequency point. For example, when the current network signal strength is between -75 dBm and -85 dBm, it is indicated that the current network signal strength is relatively strong; when the current network signal strength is between -85 dBm and -95 dBm, it is indicated that the current network signal strength is not bad, and a specific reflection is that signal bars are not full; when the current network signal strength is between -100 dBm and -110 dBm, it is indicated that the current network signal strength is relatively weak; and when the current network signal strength is less than -110 dBm, it is basically considered no signal.

S307: a target network frequency point to be connected is determined according to the current network signal strength corresponding to each network frequency point.

In an optional implementation, the vehicle-mounted terminal may use the network frequency point with strongest network signal strength as the target network frequency point to be connected.

In another optional implementation, the vehicle-mounted terminal may set a signal strength threshold, and when the current network signal strength corresponding to some network frequency points in the network frequency point table is greater than the signal strength threshold, the vehicle-mounted terminal may select any one of these network frequency points as the target network frequency point to be connected.

S309: the target network frequency point is connected, and then data interaction is performed.

In another optional implementation, the vehicle-mounted terminal may set a signal strength threshold, and in the process of cyclically searching for each network frequency point in the network frequency point table, so long as the current network signal strength corresponding to one network frequency point is determined to be greater than or equal to the signal strength threshold, the network frequency point will be determined as the target network frequency point, and data interaction is performed on the network frequency corresponding to the target network frequency point.

The above descriptions are all based on being able to find a network frequency point for connection, thereby ensuring the normal progress of data interaction; however, in the embodiments of the present application, there is also a possibility that all the network frequency points cannot be searched, and therefore, if the vehicle-mounted terminal cannot search for each network frequency point in the network frequency point table, the next round of cyclical search for each network frequency point in the network frequency point table is started based on a preset second time interval. For example, the second time interval may be 10 minutes. Or, for example, the second time interval is an interval rule, which may be a gradient time interval, and if no network frequency point is searched in the first cyclical search, the vehicle-mounted terminal may start the next round of cyclical search at an interval of 10 minutes; if no network frequency point is searched in the second cyclical search, the vehicle-mounted terminal may start the next round of cyclical search at an interval of 20 minutes; if no network frequency point is searched in the third cyclical search, the vehicle-mounted terminal may start the next round of cyclical search at an interval of 40 minutes, and so on.

However, the place where the vehicle is stalled and parked may be far away from all the base stations, therefore, there is no possibility of a signal no matter how many times the network connection is performed, and in order to avoid performing an unlimited cyclical search in this case, a cycle number threshold may be set, and when the cycle number reaches the cycle number threshold, the cyclical search is stopped. In this way, energy consumption of the vehicle may be reduced.

Optionally, the place where the vehicle is stalled and parked may be far away from all the base stations, but there may be a new base station set up near the vehicle in the near future, therefore, the vehicle-mounted terminal may search for the network frequency point according to a preset third time interval to acquire a new network frequency point when the round number of the cyclical search reaches a preset round number.

In conclusion, in order that a vehicle owner may remotely monitor the vehicle by means of a mobile terminal to check a vehicle status or to perform data interaction with the vehicle to remotely control the vehicle, the vehicle-mounted terminal needs to perform data interaction with the base station. For such requirement, in the prior art, even if the vehicle is stalled and parked, the vehicle-mounted device still constantly searches for a near network frequency point, and searching for the network frequency point causes the current of the device to exceed 50 mA, while a static current of the whole vehicle designed is generally around 20 mA, which will directly lead to that the time of the vehicle-mounted terminal to maintain operating is directly halved or even shorter when the vehicle is parked.

However, in this application, considering that the number of base stations around the place where the vehicle is stalled and parked will not be adjusted in a short time period, if the network frequency point corresponding to the base station is stored in the network frequency point table, constant search may be avoided when the vehicle is parked, thereby saving power and prolonging the operating time of the vehicle-mounted terminal.

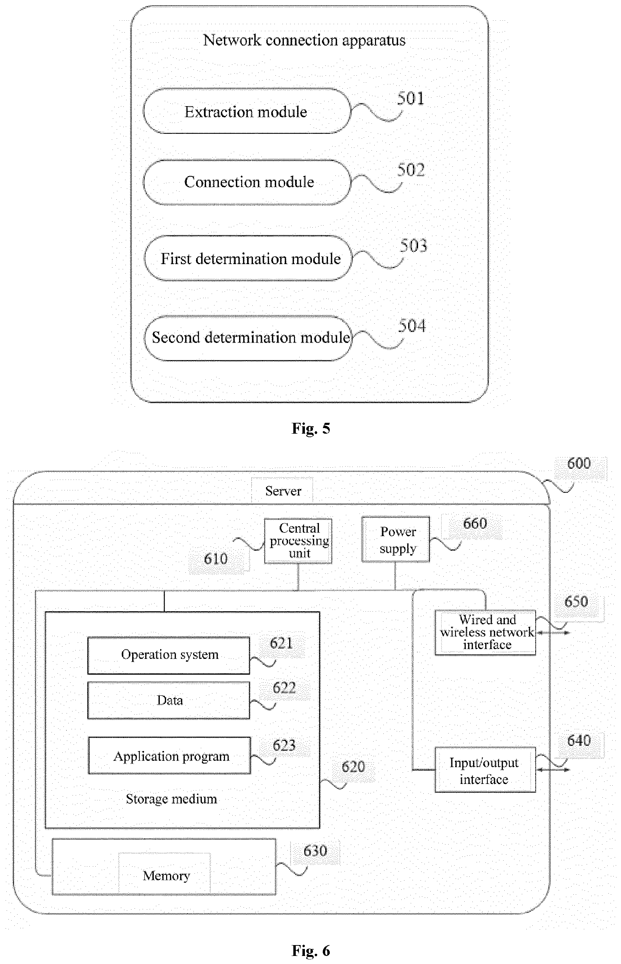

The embodiments of the present application further provide a network connection apparatus. FIG. 5 is a schematic structural diagram of a network connection apparatus according to an embodiment of the present application, and as shown in FIG. 5, the apparatus includes:
an extraction module 501, configured to extract a network frequency point table from a frequency point storage area if it is detected that a vehicle is in a stalled state, where the network frequency point table at least includes one network frequency point, and the network frequency point is acquired and stored in the network frequency point table after the vehicle is started;
a connection module 502, configured to cyclically search for each network frequency point in the network frequency point table;
a first determination module 503, configured to determine a current network signal strength corresponding to each network frequency point;
a second determination module 504, configured to determine, according to the current network signal strength corresponding to each network frequency point, a target network frequency point to be connected; and
the connection module 502, further configured to connect to the target network frequency point, and then perform data interaction.

In an optional implementation, the apparatus further includes: a searching module, configured to search for a network frequency point if it is detected that the vehicle is in a started state; and a storage module, configured to store the network frequency point acquired by searching in the network frequency point table.

In an optional implementation, the quantity of the network frequency point in the network frequency point table is preset; and the storage module is configured to replace a historical network frequency point in the network frequency point table with the network frequency point acquired by searching according to a time sequence.

In an optional implementation, the connection module is configured to cyclically search for each network frequency point in the network frequency point table according to a preset first time interval.

In an optional implementation, the connection module is configured to start the next round of cyclical search for each network frequency point in the network frequency point table based on a preset second time interval if each network frequency point in the network frequency point table cannot be searched.

In an optional implementation, the searching module is configured to search for the network frequency point according to a preset third time interval to acquire a new network frequency point if the round number of the cyclical search reaches a preset round number. The apparatus in the apparatus embodiments is based on the same application concept as the method embodiments.

The method embodiments provided by the embodiments of the present application may be executed in a computer terminal, a server, or other similar operation apparatuses. For an example of operating on a server, FIG. 6 is a block diagram of a hardware structure of a server of the network connection method according to an embodiment of the present application. As shown in FIG. 6, this server 600 may vary relatively widely due to different configurations or performances and may include one or more central processing units (CPU) 610 (the processing unit 610 may include, but is not limited to, a processing device such as a microprocessor MCU or a programmable logic device FPGA), a memory 630 used to store data, and one or more storage media 620 used to store an application program 623 or data 622 (e.g., one or more mass storage devices). The memory 630 and the storage medium 620 may be transient storage or persistent storage. The program stored in the storage medium 620 may include one or more modules, each of which may include a series of instruction operations in the server. Further, the central processing unit 610 may be configured to communicate with the storage medium 620 to execute the series of instruction operations in the storage medium 620 on the server 600. The server 600 may also include one or more power supplies 660, one or more wired or wireless network interfaces 650, one or more input/output interfaces 640, and/or, one or more operation systems 621, such as Windows ServerTM, Mac OS XTM, UnixTM, LinuxTM, FreeBSDTM and the like.

The input/output interfaces 640 may be used to receive or transmit data via a network. The specific embodiment of the above-described network may include a wireless network provided by a communication provider of the server 600. In an embodiment, the input/output interface 640 includes a network interface controller (NIC) that can be connected to other network devices through a base station to communicate with the Internet. In an embodiment, the input/output interface 640 may be a radio frequency (RF) module configured to communicate wirelessly with the Internet.

It should be understood by those of ordinary skill in the art that the structure shown in FIG. 6 is merely schematic and does not limit the structure of the electronic device described above. For example, the server 600 may also include more or fewer components than that shown in FIG. 6, or have a different configuration from that shown in FIG. 6.

The embodiments of the present application further provide a storage medium. The storage medium may be arranged in the server to save at least one relevant instruction, at least one relevant program, a relevant code set or a relevant instruction set for implementing the network connection method in the method embodiments, and the at least one instruction, the at least one program, the code set or the instruction set is loaded and executed by the processor to implement the above network connection method.

Optionally, in this embodiment, the storage medium may be located at at least one network server among multiple network servers of a computer network. Optionally, in this embodiment, the storage medium may include, but not limited to: various media that may store program codes, such as a U disk, a read-only memory (ROM), a random access memory (RAM), a mobile hard disk, a magnetic disk, or an optical disk.

It can be seen from the embodiments of the network connection method, device or storage medium provided in the present application that in the present application, if it is detected that a vehicle is in a stalled state, a network frequency point table is extracted from a frequency point storage area, where the network frequency point table at least includes one network frequency point, and the network frequency point is acquired and stored in the network frequency point table after the vehicle is started; each network frequency point in the network frequency point table is cyclically searched; a current network signal strength corresponding to each network frequency point is determined; according to the current network signal strength corresponding to each network frequency point, a target network frequency point to be connected is determined; and the target network frequency point is connected, and then data interaction is performed. In this way, a device on the vehicle may be connected through the network frequency point stored in the network frequency point table, and the network frequency point is acquired during the vehicle traveling, therefore, when being parked, the vehicle does not need to consume more power to search for a new network frequency point again, thereby prolonging the operating time of the device when the vehicle is parked, such that a vehicle owner remotely monitors the vehicle by means of a mobile terminal.

It should be noted that the above sequence of embodiments of the present application is only for description, and does not represent the advantages or disadvantages of the embodiments. In addition, specific embodiments of this specification have been described above. Other embodiments are within the scope of the appended claims. In some cases, the actions or steps recited in the claims may be performed in a different order from those in the embodiments and still achieve desired results. In addition, the processes depicted in the accompanying drawings do not necessarily require the particular order or sequential order shown to achieve the desired results. In some implementations, multitask processing and parallel processing are possible or may be advantageous.

Embodiments in the specification are described in a progressive way, same and similar parts among the embodiments can refer to each other, and each embodiment focuses on differences from the other embodiments. In particular, for the device embodiments, which are substantially similar to the method embodiments, the descriptions are relatively simple, and where relevant, reference can be made to partial descriptions of the method embodiments.

Those of ordinary skill in the art can understand that all or part of the steps for implementing the above embodiments may be completed by hardware or by a program instructing related hardware, and the program may be stored in a computer-readable storage medium, which may be a read-only memory, a magnetic disk, or an optical disc, etc.

## Claims

1. A network connection method, **characterized by** comprising:
extracting a network frequency point table from a frequency point storage area if it is detected that a vehicle (101) is in a stalled state, wherein the network frequency point table comprises at least one network frequency point, and the at least one network frequency point is corresponding to at least one base station (102, 1021, 1022, 1023) within a certain distance from the vehicle (101) and acquired and stored in the network frequency point table after the vehicle (101) is started (S301);
cyclically searching for each network frequency point in the network frequency point table (S303);
determining a current network signal strength corresponding to each network frequency point (S305);
determining, according to the current network signal strength corresponding to each network frequency point, a target network frequency point to be connected (S307); and
connecting to the target network frequency point, and then performing data interaction (S309).

2. The method according to claim 1, **characterized in that**, before extracting a network frequency point table from a frequency point storage area if it is detected that a vehicle (101) is in a stalled state, the method further comprises:
searching for a network frequency point if it is detected that the vehicle (101) is in a started state (S3000); and
storing the network frequency point acquired by searching in the network frequency point table (S3001).

3. The method according to claim 2, **characterized in that** the quantity of the network frequency point in the network frequency point table is preset; and
storing the network frequency point acquired by searching in the network frequency point table comprises:
replacing a historical network frequency point in the network frequency point table with the network frequency point acquired by searching according to a time sequence.

4. The method according to any one of claims 1 to 3, **characterized in that** cyclically searching for each network frequency point in the network frequency point table comprises:
cyclically searching for each network frequency point in the network frequency point table according to a preset first time interval.

5. The method according to claim 4, **characterized in that**, after cyclically searching for each network frequency point in the network frequency point table, the method further comprises:
if each network frequency point in the network frequency point table cannot be searched, starting the next round of cyclical search for each network frequency point in the network frequency point table based on a preset second time interval.

6. The method according to claim 5, **characterized in that** the method further comprises:
if the round number of the cyclical search reaches a preset round number, searching for the network frequency point according to a preset third time interval to acquire a new network frequency point.

7. A network connection apparatus, **characterized in that** the apparatus comprises:
an extraction module (501), configured to extract a network frequency point table from a frequency point storage area if it is detected that a vehicle (101) is in a stalled state, wherein the network frequency point table comprises at least one network frequency point, and the at least one network frequency point is corresponding to at least one base station (102, 1021, 1022, 1023) within a certain distance from the vehicle (101) and acquired and stored in the network frequency point table after the vehicle (101) is started;
a connection module (502), configured to cyclically search for each network frequency point in the network frequency point table;
a first determination module (503), configured to determine a current network signal strength corresponding to each network frequency point;
a second determination module (504), configured to determine, according to the current network signal strength corresponding to each network frequency point, a target network frequency point to be connected; and
the connection module (502), further configured to connect to the target network frequency point, and then perform data interaction.

8. The apparatus according to claim 7, **characterized in that** the apparatus further comprises:
a searching module, configured to search for a network frequency point if it is detected that the vehicle (101) is in a started state; and
a storage module, configured to store the network frequency point acquired by searching in the network frequency point table.

9. The apparatus according to claim 8, **characterized in that** the quantity of the network frequency point in the network frequency point table is preset; and
the storage module is configured to replace a historical network frequency point in the network frequency point table with the network frequency point acquired by searching according to a time sequence.

10. The apparatus according to any one of claims 7 to 9, **characterized in that**,
the connection module (502) is configured to cyclically search for each network frequency point in the network frequency point table according to a preset first time interval.

11. The apparatus according to claim 10, **characterized in that**,
the connection module (502) is configured to start the next round of cyclical search for each network frequency point in the network frequency point table based on a preset second time interval if each network frequency point in the network frequency point table cannot be searched.

12. The apparatus according to claim 11, **characterized in that**,
the searching module is configured to search for the network frequency point according to a preset third time interval to acquire a new network frequency point if the round number of the cyclical search reaches a preset round number.

13. An electronic device, **characterized in that** the electronic device comprises a processor and a memory, wherein the memory stores at least one instruction, at least one program, and a code set or an instruction set, and the at least one instruction, the at least one program, the code set or the instruction set is loaded and executed by the processor to implement the network connection method according to any one of claims 1 to 6.

14. A computer-readable storage medium, **characterized in that** the storage medium stores at least one instruction, at least one program, a code set or an instruction set, wherein the at least one instruction, the at least one program, the code set or the instruction set is loaded and executed by a processor to implement the network connection method according to any one of claims 1 to 6.

## Patentansprüche

1. Netzwerkverbindungsverfahren, **dadurch gekennzeichnet, dass** es Folgendes umfasst:
Extrahieren einer Netzwerkfrequenzpunkttabelle aus einem Frequenzpunktspeicherbereich, wenn detektiert wird, dass sich ein Fahrzeug (101) in einem abgestellten Zustand befindet, wobei die Netzwerkfrequenzpunkttabelle mindestens einen Netzwerkfrequenzpunkt umfasst, wobei der mindestens eine Netzwerkfrequenzpunkt mindestens einer Basisstation (102, 1021, 1022, 1023) innerhalb einer bestimmten Entfernung von dem Fahrzeug (101) entspricht und in der Netzwerkfrequenzpunkttabelle erfasst und gespeichert wird, nachdem das Fahrzeug (101) gestartet wurde (S301);
zyklisches Suchen nach jedem Netzwerkfrequenzpunkt in der Netzwerkfrequenzpunkttabelle (S303);
Bestimmen einer aktuellen Netzwerksignalstärke, die jedem Netzwerkfrequenzpunkt entspricht (S305);
Bestimmen eines zu verbindenden Ziel-Netzwerkfrequenzpunktes gemäß der aktuellen Netzwerksignalstärke, die jedem Netzwerkfrequenzpunkt entspricht (S307); und
Herstellen einer Verbindung mit dem Ziel-Netzwerkfrequenzpunkt und dann Durchführen einer Dateninteraktion (S309).

2. Verfahren nach Anspruch 1, **dadurch gekennzeichnet, dass** das Verfahren vor dem Extrahieren einer Netzwerkfrequenzpunkttabelle aus einem Frequenzpunktspeicherbereich, wenn detektiert wird, dass sich ein Fahrzeug (101) in einem abgestellten Zustand befindet, ferner umfasst:
Suchen nach einem Netzwerkfrequenzpunkt, wenn detektiert wird, dass sich das Fahrzeug (101) in einem gestarteten Zustand (S3000) befindet; und
Speichern des durch das Suchen ermittelten Netzwerkfrequenzpunktes in der Netzwerkfrequenzpunkttabelle (S3001).

3. Verfahren nach Anspruch 2, **dadurch gekennzeichnet, dass** die Menge des Netzwerkfrequenzpunktes in der Netzwerkfrequenzpunkttabelle voreingestellt ist; und wobei das Speichern des durch das Suchen ermittelten Netzwerkfrequenzpunktes in der Netzwerkfrequenzpunkttabelle umfasst:
Ersetzen eines historischen Netzwerkfrequenzpunktes in der Netzwerkfrequenzpunkttabelle durch den Netzwerkfrequenzpunkt, der durch das Suchen gemäß einer Zeitsequenz ermittelt wurde.

4. Verfahren nach einem der Ansprüche 1 bis 3, **dadurch gekennzeichnet, dass** das zyklische Suchen nach jedem Netzwerkfrequenzpunkt in der Netzwerkfrequenzpunkttabelle umfasst:
zyklisches Suchen nach jedem Netzwerkfrequenzpunkt in der Netzwerkfrequenzpunkttabelle gemäß einem voreingestellten ersten Zeitintervall.

5. Verfahren nach Anspruch 4, **dadurch gekennzeichnet, dass** nach dem zyklischen Suchen nach jedem Netzwerkfrequenzpunkt in der Netzwerkfrequenzpunkttabelle das Verfahren weiterhin umfasst:
wenn jeder Netzwerkfrequenzpunkt in der Netzwerkfrequenzpunkttabelle nicht gesucht werden kann, Starten der nächsten Runde des zyklischen Suchen für jeden Netzwerkfrequenzpunkt in der Netzwerkfrequenzpunkttabelle auf der Grundlage eines voreingestellten zweiten Zeitintervalls.

6. Verfahren nach Anspruch 5, **dadurch gekennzeichnet, dass** das Verfahren ferner umfasst:
wenn die Rundenzahl des zyklischen Suchen eine voreingestellte Rundenzahl erreicht, Suchen nach dem Netzwerkfrequenzpunkt gemäß einem voreingestellten dritten Zeitintervall, um einen neuen Netzwerkfrequenzpunkt zu ermitteln.

7. Netzwerkverbindungsvorrichtung, **dadurch gekennzeichnet, dass** die Vorrichtung umfasst:
ein Extraktionsmodul (501), das so konfiguriert ist, dass es eine Netzwerkfrequenzpunkttabelle aus einem Frequenzpunktspeicherbereich extrahiert, wenn detektiert wird, dass sich ein Fahrzeug (101) in einem abgestellten Zustand befindet, wobei die Netzwerkfrequenzpunkttabelle mindestens einen Netzwerkfrequenzpunkt umfasst, wobei der mindestens eine Netzwerkfrequenzpunkt mindestens einer Basisstation (102, 1021, 1022, 1023) innerhalb einer bestimmten Entfernung von dem Fahrzeug (101) entspricht und in der Netzwerkfrequenzpunkttabelle ermittelt und gespeichert wird, nachdem das Fahrzeug (101) gestartet wurde (S301);
ein Verbindungsmodul (502), das so konfiguriert ist, dass es zyklisch nach jedem Netzwerkfrequenzpunkt in der Netzwerkfrequenzpunkttabelle sucht;
ein erstes Bestimmungsmodul (503), das so konfiguriert ist, dass es eine aktuelle Netzwerksignalstärke bestimmt, die jedem Netzwerkfrequenzpunkt entspricht;
ein zweites Bestimmungsmodul (504), das so konfiguriert ist, dass es gemäß der aktuellen Netzwerksignalstärke, die jedem Netzwerkfrequenzpunkt entspricht, einen zu verbindenden Ziel-Netzwerkfrequenzpunkt bestimmt; und
wobei das Verbindungsmodul (502) ferner so konfiguriert ist, dass es eine Verbindung mit dem Ziel-Netzwerkfrequenzpunkt herstellt und dann eine Dateninteraktion durchführt.

8. Vorrichtung nach Anspruch 7, **dadurch gekennzeichnet, dass** die Vorrichtung weiterhin umfasst:
ein Suchmodul, das so konfiguriert ist, dass es nach einem Netzwerkfrequenzpunkt sucht, wenn detektiert wird, dass sich das Fahrzeug (101) in einem gestarteten Zustand befindet; und
ein Speichermodul, das so konfiguriert ist, dass es den durch das Suchen in der Netzwerkfrequenzpunkttabelle ermittelten Netzwerkfrequenzpunkt speichert.

9. Vorrichtung nach Anspruch 8, **dadurch gekennzeichnet, dass** die Menge des Netzwerkfrequenzpunktes in der Netzwerkfrequenzpunkttabelle voreingestellt ist; und wobei das Speichermodul so konfiguriert ist, dass es einen historischen Netzwerkfrequenzpunkt in der Netzwerkfrequenzpunkttabelle durch den Netzwerkfrequenzpunkt ersetzt, der durch das Suchen gemäß einer Zeitsequenz erfasst wurde.

10. Vorrichtung nach einem der Ansprüche 7 bis 9, **dadurch gekennzeichnet, dass** das Verbindungsmodul (502) so konfiguriert ist, dass es zyklisch nach jedem Netzwerkfrequenzpunkt in der Netzwerkfrequenzpunkttabelle gemäß einem voreingestellten ersten Zeitintervall sucht.

11. Vorrichtung nach Anspruch 10, **dadurch gekennzeichnet, dass** das Verbindungsmodul (502) so konfiguriert ist, dass es die nächste Runde des zyklischen Suchen für jeden Netzwerkfrequenzpunkt in der Netzwerkfrequenzpunkttabelle auf der Grundlage eines voreingestellten zweiten Zeitintervalls beginnt, wenn jeder Netzwerkfrequenzpunkt in der Netzwerkfrequenzpunkttabelle nicht gesucht werden kann.

12. Vorrichtung nach Anspruch 11, **dadurch gekennzeichnet, dass** das Suchmodul so konfiguriert ist, dass es gemäß einem vorgegebenen dritten Zeitintervall nach dem Netzwerkfrequenzpunkt sucht, um einen neuen Netzwerkfrequenzpunkt zu ermitteln, wenn die Rundenzahl der zyklischen Suche eine vorgegebene Rundenzahl erreicht.

13. Elektronische Vorrichtung, **dadurch gekennzeichnet, dass** die elektronische Vorrichtung einen Prozessor und einen Speicher umfasst, wobei der Speicher mindestens einen Befehl, mindestens ein Programm und einen Codesatz oder einen Befehlssatz speichert, wobei der mindestens eine Befehl, das mindestens eine Programm, der Codesatz oder der Befehlssatz durch den Prozessor geladen und ausgeführt wird, um das Netzwerkverbindungsverfahren nach einem der Ansprüche 1 bis 6 zu implementieren.

14. Computerlesbares Speichermedium, **dadurch gekennzeichnet, dass** das Speichermedium mindestens einen Befehl, mindestens ein Programm, einen Codesatz oder einen Befehlssatz speichert, wobei der mindestens eine Befehl, das mindestens eine Programm, der Codesatz oder der Befehlssatz von einem Prozessor geladen und ausgeführt wird, um das Netzwerkverbindungsverfahren nach einem der Ansprüche 1 bis 6 zu implementieren.

## Revendications

1. Procédé de connexion de réseau, **caractérisé en ce qu'**il comprend :
extraire une table de points de fréquence de réseau à partir d'une zone de stockage de points de fréquence s'il est détecté qu'un véhicule (101) est dans un état de décrochage, dans lequel la table de points de fréquence de réseau comprend au moins un point de fréquence de réseau, et l'au moins un point de fréquence de réseau correspond à au moins une station de base (102, 1021, 1022, 1023) à une certaine distance du véhicule (101) et est acquis et stocké dans la table de points de fréquence de réseau après le démarrage du véhicule (101) (S301) ;
rechercher de manière cyclique chaque point de fréquence de réseau dans la table de points de fréquence de réseau (S303) ;
déterminer une intensité de signal de réseau actuelle correspondant à chaque point de fréquence de réseau (S305) ;
déterminer, en fonction de l'intensité de signal de réseau actuelle correspondant à chaque point de fréquence de réseau, un point de fréquence de réseau cible à connecter (S307) ; et
connecter le point de fréquence de réseau cible, puis effectuer une interaction de données (S309).

2. Procédé selon la revendication 1, **caractérisé en ce que**, avant d'extraire une table de points de fréquence de réseau à partir d'une zone de stockage de points de fréquence s'il est détecté qu'un véhicule (101) est dans un état de décrochage, le procédé comprend en outre :
rechercher un point de fréquence de réseau s'il est détecté que le véhicule (101) est dans un état démarré (S3000) ; et
stocker le point de fréquence de réseau acquis en recherchant dans la table de points de fréquence de réseau (S3001).

3. Procédé selon la revendication 2, **caractérisé en ce que** la quantité du point de fréquence de réseau dans la table de points de fréquence de réseau est prédéfinie ; et l'étape de stocker le point de fréquence de réseau acquis en recherchant dans la table de points de fréquence de réseau comprend :
remplacer un point de fréquence de réseau historique dans la table de points de fréquence de réseau par le point de fréquence de réseau acquis en recherchant en fonction d'une séquence temporelle.

4. Procédé selon l'une quelconque des revendications 1 à 3, **caractérisé en ce que** l'étape de rechercher de manière cyclique chaque point de fréquence de réseau dans la table de points de fréquence de réseau comprend :
rechercher de manière cyclique chaque point de fréquence de réseau dans la table de points de fréquence de réseau en fonction d'un premier intervalle de temps prédéfini.

5. Procédé selon la revendication 4, **caractérisé en ce que**, après l'étape de rechercher de manière cyclique chaque point de fréquence de réseau dans la table de points de fréquence de réseau, le procédé comprend en outre :
si aucun point de fréquence de réseau ne peut être recherché dans la table de points de fréquence de réseau, lancer le prochain cycle de recherche cyclique pour chaque point de fréquence de réseau dans la table de points de fréquence de réseau en fonction d'un deuxième intervalle de temps prédéfini.

6. Procédé selon la revendication 5, **caractérisé en ce que** le procédé comprend en outre :
si le nombre de cycle de la recherche cyclique atteint un nombre de cycle prédéfini, rechercher le point de fréquence de réseau en fonction d'un troisième intervalle de temps prédéfini pour acquérir un nouveau point de fréquence de réseau.

7. Appareil de connexion de réseau, **caractérisé en ce qu'**il comprend :
un module d'extraction (501), configuré pour extraire une table de points de fréquence de réseau à partir d'une zone de stockage de points de fréquence s'il est détecté qu'un véhicule (101) est dans un état de décrochage, dans lequel la table de points de fréquence de réseau comprend au moins un point de fréquence de réseau, et l'au moins un point de fréquence de réseau correspond à au moins une station de base (102, 1021, 1022, 1023) à une certaine distance du véhicule (101) et est acquis et stocké dans la table de points de fréquence de réseau après le démarrage du véhicule (101) ;
un module de connexion (502), configuré pour rechercher de manière cyclique chaque point de fréquence de réseau dans la table de points de fréquence de réseau ;
un premier module de détermination (503), configuré pour déterminer une intensité de signal de réseau actuelle correspondant à chaque point de fréquence de réseau ;
un deuxième module de détermination (504), configuré pour déterminer, en fonction de l'intensité de signal de réseau actuelle correspondant à chaque point de fréquence de réseau, un point de fréquence de réseau cible à connecter ; et
le module de connexion (502), configuré en outre pour connecter le point de fréquence de réseau cible, puis effectuer une interaction de données.

8. Appareil selon la revendication 7, **caractérisé en ce que** l'appareil comprend en outre :
un module de recherche, configuré pour un rechercher un point de fréquence de réseau s'il est détecté que le véhicule (101) est dans un état démarré ; et
un module de stockage, configuré pour stocker le point de fréquence de réseau acquis en recherchant dans la table de points de fréquence de réseau.

9. Appareil selon la revendication 8, **caractérisé en ce que** la quantité du point de fréquence de réseau dans la table de points de fréquence de réseau est prédéfinie ; et le module de stockage est configuré pour remplacer un point de fréquence de réseau historique dans la table de points de fréquence de réseau par le point de fréquence de réseau acquis en recherchant en fonction d'une séquence temporelle.

10. Appareil selon l'une quelconque des revendications 7 à 9, **caractérisé en ce que**,
le module de connexion (502) est configuré pour rechercher de manière cyclique chaque point de fréquence de réseau dans la table de points de fréquence de réseau en fonction d'un premier intervalle de temps prédéfini.

11. Appareil selon la revendication 10, **caractérisé en ce que**,
le module de connexion (502) est configuré pour lancer le prochain cycle de recherche cyclique pour chaque point de fréquence de réseau dans la table de points de fréquence de réseau en fonction d'un deuxième intervalle de temps prédéfini si aucun point de fréquence de réseau ne peut être recherché dans la table de points de fréquence de réseau,

12. Appareil selon la revendication 11, **caractérisé en ce que**,
le module de recherche est configuré pour rechercher le point de fréquence de réseau en fonction d'un troisième intervalle de temps prédéfini pour acquérir un nouveau point de fréquence de réseau si le nombre de cycle de la recherche cyclique atteint un nombre de cycle prédéfini.

13. Dispositif électronique, **caractérisé en ce que** le dispositif électronique comprend un processeur et une mémoire, dans lequel la mémoire stocke au moins une instruction, au moins un programme et un ensemble de codes ou un ensemble d'instructions, et l'au moins une instruction, l'au moins un programme et l'ensemble de codes ou l'ensemble d'instructions sont chargés et exécutés par le processeur pour mettre en oeuvre le procédé de connexion de réseau selon l'une quelconque des revendications 1 à 6.

14. Support de stockage lisible par ordinateur, **caractérisé en ce que** le support de stockage stocke au moins une instruction, au moins un programme, et un ensemble de codes ou un ensemble d'instructions, et l'au moins une instruction, l'au moins un programme et l'ensemble de codes ou l'ensemble d'instructions sont chargés et exécutés par le processeur pour mettre en oeuvre le procédé de connexion de réseau selon l'une quelconque des revendications 1 à 6.
